# EUROPEAN PATENT APPLICATION

(11) **EP 1 722 433 A1**
(43) Date of publication of application: **15.11.2006**
(21) Application number: 06008120.5
(22) Date of filing: 19.04.2006
(51) Int. Cl.: H01M 8/04, H01M 8/10, G01N 29/024

(54) **Fuel cell system and method therefor of measuring fuel concentration in fuel aqueous solution**

(30) Priority: 20.04.2005 JP 2005122274
(71) Applicant: YAMAHA HATSUDOKI KABUSHIKI KAISHA, Iwata-shi, Shizuoka-ken (JP)
(72) Inventor: Muramatsu, Ysuyuki, Iwata-shi Shizuoka-ken (JP); Kohda, Hideo, Iwata-shi Shizuoka-ken (JP); Ito, Takashi, Iwata-shi Shizuoka-ken (JP)
(74) Representative: Grünecker, Kinkeldey, Stockmair & Schwanhäusser Anwaltssozietät

(57) **Abstract**

There is provided a fuel cell system (100) capable of accurately measuring fuel concentration in fuel aqueous solution being sent toward a fuel cell without decreasing power generation efficiency, and a method therefor of measuring the fuel concentration in fuel aqueous solution. The fuel cell system (100) includes a cell stack (102) and circulating means including pipes (P3) through (P7) and an aqueous solution pump (146) for circulating supply of methanol aqueous solution to a cell stack (102). The circulating means further includes an aqueous solution tank (130) provided downstream of the cell stack (102) and upstream of the aqueous solution pump (146). By opening a measurement valve (138), part of methanol aqueous solution flowing through the pipe (P4) is introduced into a pipe (P17). The measurement valve (138) is then closed to trap the methanol aqueous solution in the pipe (P17), and measuring means, in particular an ultrasonic sensor, measures the methanol concentration of the methanol aqueous solution in the pipe (P17). By opening the measurement valve (138), the methanol aqueous solution is returned to the aqueous solution tank (130) via pipes (P18,P19).

## Description

### BACKGROUND OF THE INVENTION

### Field of the Invention

The present invention relates to fuel cell systems and a method of measuring fuel concentration in fuel aqueous solution for the fuel cell systems. More specifically, the present invention relates to a fuel cell system in which fuel aqueous solution is sent to the fuel cell, and a method of measuring the concentration of fuel in the fuel aqueous solution, for the system.

### Description of the Related Art

In fuel cell systems, fuel concentration in fuel aqueous solution to be sent toward the fuel cell is measured by using a concentration sensor and adjustment is made to the ever-changing fuel concentration in the fuel aqueous solution in order to generate power efficiently while slowing down degradation of the fuel cell as well.

The applicant of the present invention has proposed a variety of concentration sensor layouts for fuel cell systems in Patent Document 1. For example, Patent Document 1 discloses a fuel cell system having a concentration sensor layout for fuel concentration measurement in a pipe which connects an aqueous solution pump with a fuel cell, a fuel cell system having a concentration sensor layout for fuel concentration measurement in a chamber provided in a pipe which connects an aqueous solution tank with an aqueous solution pump, and a fuel cell system having a concentration sensor layout for fuel concentration measurement in an aqueous solution tank.
(Patent Document 1) JP-A 2004-95376 Gazette
(Patent Document 2) JP-A 2005-514620 Gazette
(Patent Document 3) JP-A 2003-297403 Gazette

However, when fuel concentration measurement is made in the pipe which connects the aqueous solution pump with the fuel cell, the flow of fuel aqueous solution must be stopped in order to measure the fuel concentration in the aqueous solution accurately. However, stopping the aqueous solution pump for this purpose will decrease power generation efficiency. When fuel concentration measurement is made in the chamber, the fuel concentration of the fuel aqueous solution which is being sent toward the fuel cell cannot be measured accurately since it is difficult to replace fuel aqueous solution in the chamber. When fuel concentration measurement is made in the aqueous solution tank, fuel aqueous solution which is being recycled produces air bubbles when coming into the aqueous solution tank. The air bubbles stay on the concentration sensor and can disable the sensor from measuring the fuel concentration accurately.

Patent Document 2 discloses a direct methanol fuel cell system in which a pipe connecting an aqueous solution tank with a fuel cell has a bypass provided with a measurement section for concentration measurement by using an ultrasonic sensor.

However, the bypass structure as disclosed in Patent Document 2 does not create a significant pressure difference between the branching point and the merging point of the bypass to and from the measurement section. This leads to potential problems that a sufficient flow of fuel aqueous solution will not be supplied from the branching point to the measurement section, or that a flow of fuel aqueous solution from the measurement section will not be discharged smoothly at the merging point. Either of the situations will pose a problem in fuel concentration measurement. Further, ultrasonic sensors have a tendency to lose its measurement accuracy as the temperature of fuel aqueous solution increases. For this reason, cooling is commonly provided to the measurement section. In the bypass structure disclosed in Patent Document 2, the fuel cell is supplied with cooled fuel aqueous solution which has undergone the measurement. This will decrease the temperature of the fuel cell and can decrease power generation efficiency.

Further, Patent Document 3 discloses a hydrogen fuel cell system in which a cathode-side off-gas flow path is provided with a bypass, a throttle is provided to create a pressure difference between the branching point and the merging point in the off-gas flow path so that the off-gas can easily be introduced into the bypass, and the hydrogen concentration in the off-gas flowing in the bypass is measured by using a sensor.

However, if such a structure as the above is utilized in direct methanol fuel cell systems, the throttle causes a loss, which increases power consumption by the aqueous solution pump, leading to decreased power generation efficiency.

### SUMMARY OF THE INVENTION

Therefore, a primary object of the present invention is to provide a fuel cell system capable of accurately measuring the fuel concentration in fuel aqueous solution which is being sent toward the fuel cell without decreasing power generation efficiency, and to provide a method of measuring the fuel concentration in fuel aqueous solution, for the system.

According to an aspect of the present invention, there is provided a fuel cell system including: a fuel cell, circulating means including a flow path and an aqueous solution pump for circulating supply of fuel aqueous solution to the fuel cell; a measuring portion for introducing part of the fuel aqueous solution flowing in a portion of the flow path which is downstream of the aqueous solution pump and upstream of the fuel cell; flow controlling means for controlled replacement and trapping of the fuel aqueous solution in the measuring portion; a recycling path for returning the fuel aqueous solution from the measuring portion to a portion of the circulating means which is downstream of the fuel cell and upstream of the aqueous solution pump; and measuring means for measuring fuel concentration of the fuel aqueous solution in the measuring portion.

Further, according to another aspect of the present invention, there is provided a method of measuring fuel concentration in fuel aqueous solution for a fuel cell system including circulating means which provides circulating supply of the fuel aqueous solution to a fuel cell using an aqueous solution pump. The method includes: a first step of introducing the fuel aqueous solution sent from the aqueous solution pump toward the fuel cell, into a measuring space; a second step of trapping the fuel aqueous solution which has flown into the measuring space within the measuring space; a third step of measuring fuel concentration of the fuel aqueous solution trapped in the measuring space; and a fourth step of discharging the fuel aqueous solution for which the fuel concentration measurement has been made, from the measuring space to a portion of the circulating means which is downstream of the fuel cell and upstream of the aqueous solution pump.

According to the present invention, fuel aqueous solution is sent toward the fuel cell via the flow path by the aqueous solution pump, and part of the fuel aqueous solution which is flowing in the flow path flows into the measuring portion which provides the measuring space. Then, as the flow controlling means is actuated, the flow of fuel aqueous solution in the measuring portion is reduced, and the measuring means makes a measurement on the fuel concentration in the fuel aqueous solution trapped in the measuring portion. After the measurement of the fuel concentration, new fuel aqueous solution flows from the flow path into the measuring portion and the fuel aqueous solution whose fuel concentration has been measured is discharged from the measuring portion as the flow controlling means is actuated. In other words, power generation is continued with continuous supply operation of fuel aqueous solution toward the fuel cell while fuel aqueous solution in the measuring portion is replaced and fuel concentration measurement is made to new fuel aqueous solution trapped in the measuring portion. In this process, fuel aqueous solution discharged from the measuring portion is returned to a portion of the circulating means which is downstream of the fuel cell and upstream of the aqueous solution pump. Therefore, it is possible to create a large pressure difference between the branching point and the merging point without providing a throttle in the flow path, and reliably replace a body of fuel aqueous solution in the measuring portion with another body of fuel aqueous solution. Since there is no need for providing a throttle in the flow path, there is no pressure loss, and it is possible to reduce power consumption by the aqueous solution pump. Therefore, it becomes possible to accurately measure the fuel concentration in the fuel aqueous solution which is sent toward the fuel cell, without decreasing power generation efficiency.

Preferably, the circulating means further includes an aqueous solution tank provided downstream of the fuel cell and upstream of aqueous solution pump for storing the fuel aqueous solution, and returns the fuel aqueous solution discharged from the measuring portion to the aqueous solution tank. This arrangement enables to return fuel aqueous solution whose concentration has been measured in the measuring portion to the aqueous solution tank, enabling to use the fuel aqueous solution without wasting it. Further, even if the fuel aqueous solution in the measuring portion is cooled, fuel aqueous solution in the measuring portion is returned to the aqueous solution tank thereby avoiding direct supply to the fuel cell. This enables to prevent decrease in power generation efficiency caused by temperature decrease in the fuel cell.

Further preferably, the flow controlling means includes a valve provided in the recycling path. In this case, trapping and replacing of fuel aqueous solution in the measuring portion is achieved easily by a simple operation of opening and closing of the valve.

In the present invention, the measuring portion traps fuel aqueous solution, and the fuel concentration measurement is made to the trapped fuel aqueous solution. The present invention is particularly effective in fuel cell systems including measuring means which makes use of an ultrasonic sensor whose measuring accuracy can be adversely affected when there is a flow in the fuel aqueous solution.

Generally, transport equipment should be able to move continuously over a long distance, and therefore a fuel cell system equipped in the transport equipment should be able to generate power continuously. The fuel cell system according to the present invention can be used suitably for transport equipment since the system enables accurate measurement of the fuel concentration in fuel aqueous solution which is being sent to the fuel cell without disturbing power generation.

The above object, other objects, characteristics, aspects and advantages of the present invention will become clearer from the following detailed description of an embodiment to be given with reference to the attached drawings.

### BRIEF DESCRIPTION OF THE DRAWINGS

Fig. 1 is a left side view of a two-wheeled vehicle equipped with a fuel cell system according to the present invention;
Fig. 2 is a perspective view taken from front left, showing how the fuel cell system is mounted on a two-wheeled vehicle frame;
Fig. 3 is a perspective view taken from rear left, showing how the fuel cell system is mounted on the two-wheeled vehicle frame;
Fig. 4 is a left side view showing piping in the fuel cell system;
Fig. 5 is a right side view showing the piping in the fuel cell system;
Fig. 6 is a perspective view taken from front left, showing the piping in the fuel cell system;
Fig. 7 is a perspective view taken from front right, showing the piping in the fuel cell system;
Fig. 8 is a diagram of a fuel cell stack;
Fig. 9 is a diagram of an individual fuel cell;
Fig. 10 is a system diagram showing the piping of the fuel cell system;
Fig. 11 is a graph showing pressures in the fuel cell stack and at various components of circulating means; and
Fig. 12 is a flowchart showing a concentration measuring process in the fuel cell system.

### DETAILED DESCRIPTION OF THE PREFERRED EMBODIMENTS

Hereinafter, a preferred embodiment of the present invention will be described, with reference to the drawings. The embodiment is a case in which a fuel cell system according to the present invention is equipped in a two-wheeled vehicle 10 as an example of transport equipment. The description will first cover the two-wheeled vehicle 10. It should be noted that the terms left and right, front and rear, up and down as used in the embodiment of the present invention are determined from the normal state of riding, i.e., as viewed by the rider sitting on the rider's seat of the two-wheeled vehicle 10, with the rider facing toward a handle 24.

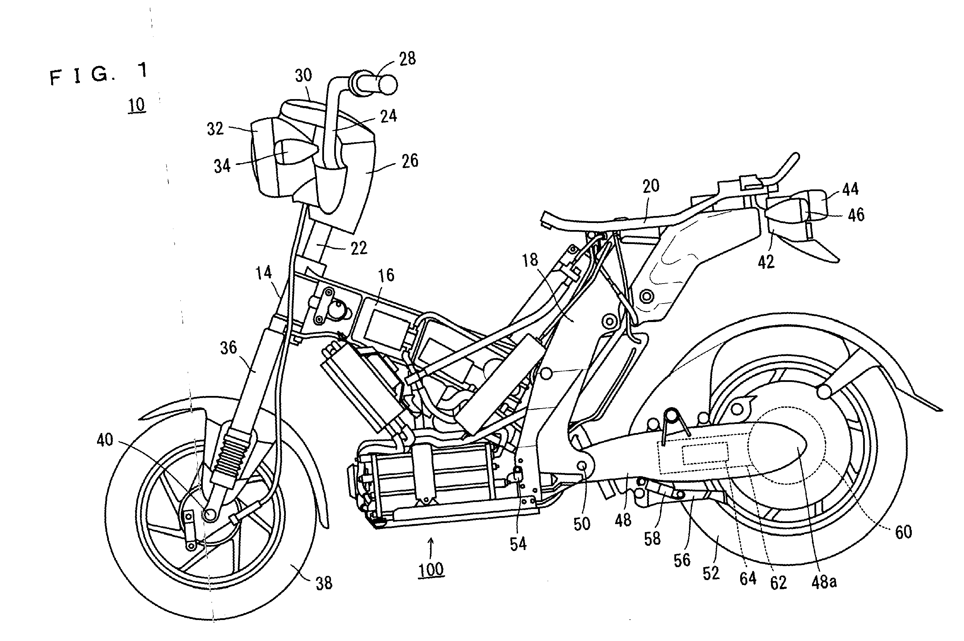

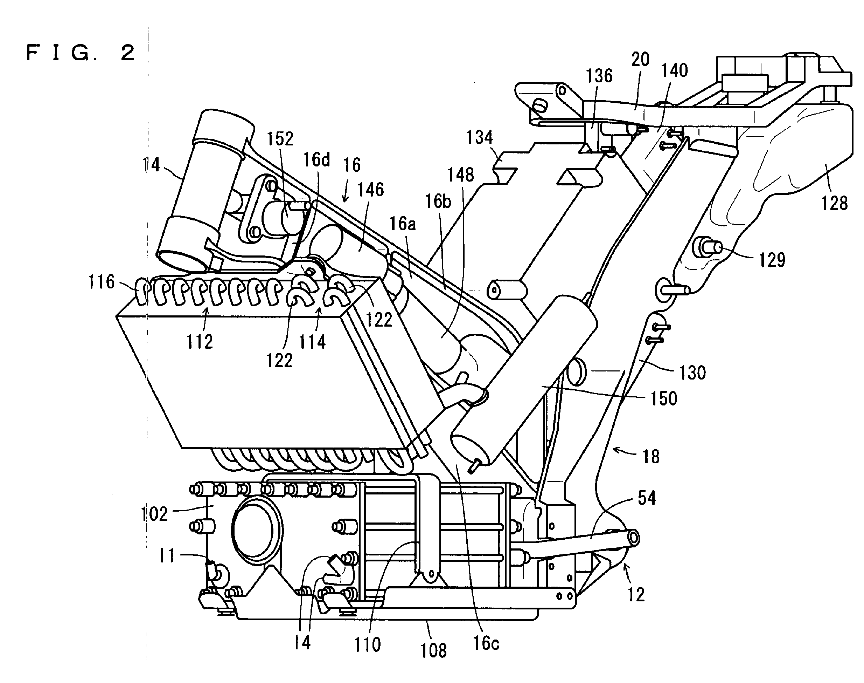

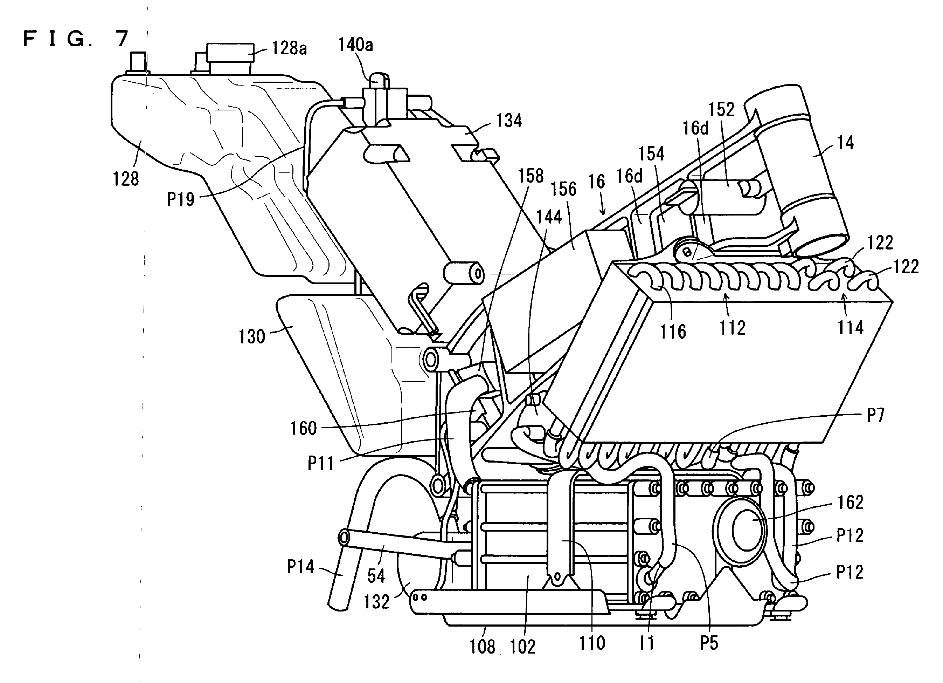

Referring to Fig. 1 through Fig. 7, the two-wheeled vehicle 10 includes a vehicle frame 12. The vehicle frame 12 includes a head pipe 14, a front frame 16 which has an I-shaped vertical section and extends in a rearward and downward direction from the head pipe 14, a rear frame 18 which is connected with a rear end of the front frame 16 and rising in a rearward and upward direction, and a seat rail 20 which is attached to a top end of the rear frame 18. The front frame 16 has its rear end connected with a location on the rear frame 18 which is close to but slightly away from a center portion of the rear frame 18 toward a lower end. The front frame 16 and the rear frame 18 combine to form a substantially Y-shape structure as viewed from the side.

The front frame 16 includes: a plate member 16a which has a width in the vertical directions and extends in a rearward and downward direction, perpendicularly to the lateral directions of the vehicle; flanges 16b, 16c which are formed respectively at an upper end edge and a lower end edge of the plate member 16a, extend in a rearward and downward direction and have a width in the lateral directions; reinforcing ribs 16d protruding from both surfaces of the plate member 16a; and a connecting region 16e at a rear end for connecting the rear frame 18 with bolts for example. The reinforcing ribs 16d and the flanges 16b, 16c serve as storage walls, providing compartments on both surfaces of the plate member 16a as storage spaces for components of a fuel cell system 100 to be described later.

The rear frame 18 includes plate members 18a, 18b which extend in a rearward and upward direction, have a width in the front and rear directions, and sandwiches the connecting region 16e of the front frame 16.

As shown mainly in Fig. 1, a steering shaft 22 is pivotably inserted in the head pipe 14 for steering the vehicle. A handle support 26 is provided at an upper end of the steering shaft 22, to which a handle 24 is fixed. Grips 28 are provided at two ends of the handle 24. The right-hand grip 28 serves as a rotatable throttle grip.

A display/operation board (hereinafter simply called a meter) 30 is provided in front of the handle 24 of the handle support 26. The meter 30 is an integrated dashboard including a display provided by e.g. a liquid crystal display, for providing the rider with a variety of information concerning the ride, and input devices via which the rider inputs a variety of information. A head lamp 32 is provided below the meter 30 at the handle support 26, and a flasher lamp 34 is provided on each of the left and right sides of the head lamp 32.

A pair of left and right front forks 36 extend downwardly from a bottom end of the steering shaft 22. Each of the front forks 36 includes a bottom end supporting a front wheel 38 via a front wheel shaft 40. The front wheel 38 is suspended by the front forks 36, and is freely rotatable around the front wheel shaft 40.

On the other hand, a frame-like seat rail 20 is attached to a rear end of the rear frame 18. The seat rail 20 is fixed on an upper end of the rear frame 18 by welding for example, generally in the fore and front directions. An unillustrated seat is provided pivotably on the seat rail 20. A mounting bracket 42 is fixed to rear ends of the seat rail 20. The mounting bracket 42 supports a tail lamp 44 and a pair of left and right flasher lamps 46.

The rear frame 18 includes a lower end which pivotably supports a rear arm 48 via a pivot shaft 50. The rear arm 48 has a rear end 48a which rotatably supports a driving wheel i.e., a rear wheel 52. The rear arm 48 and the rear wheel 52 are suspended with an unillustrated rear cushion with respect to the rear frame 18.

A pair of footrest attaching bars 54 are provided at a lower front portion of the rear frame 18, to protrude in the left and right directions from the rear frame 18 respectively. An unillustrated footrest is attached to each of the footrest attaching bars 54. Behind the footrest attaching bars 54, a main stand 56 is pivotably supported by the rear arm 48. The main stand 56 is biased in a closing direction by a return spring 58.

Inwardly of the rear end 48a of the rear arm 48, there is disposed an electric motor 60 of an axial gap type, for example, which is connected with the rear wheel 52 to rotate the rear wheel 52, and a drive unit 62 which is electrically connected with the electric motor 60. The drive unit 62 includes a controller 64 for controlling the rotating drive of the electric motor 60.

The two-wheeled vehicle 10 as described is equipped with a fuel cell system 100 along the vehicle frame 12. The fuel cell system 100 generates electric energy for driving the electric motor 60 and other components.

Hereinafter, the fuel cell system 100 will be described.

The fuel cell system 100 is a direct methanol fuel cell system which uses methanol (an aqueous solution of methanol) directly without reformation for power generation.

The fuel cell system 100 includes a fuel cell stack (hereinafter simply called cell stack) 102 mounted below the front frame 16.

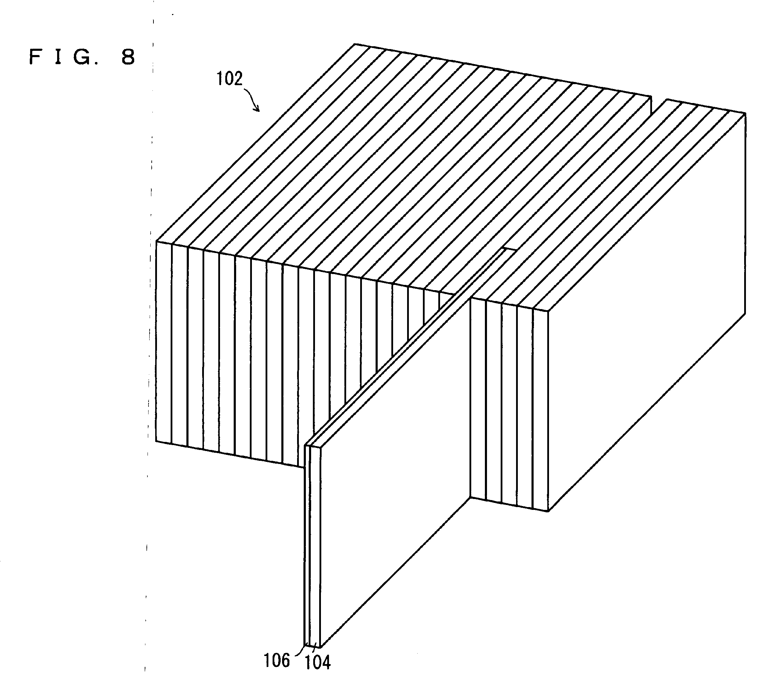

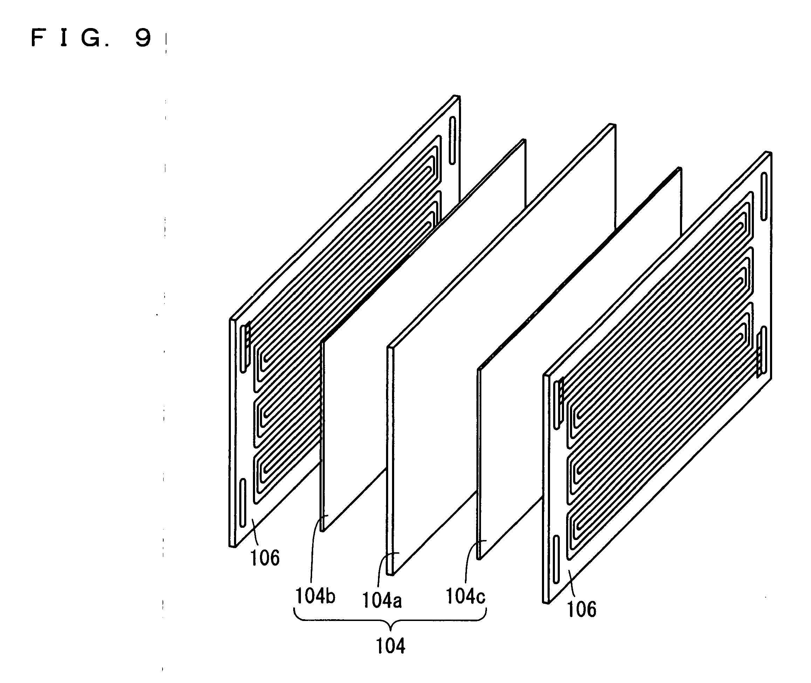

As shown in Fig. 8 and Fig. 9, the cell stack 102 includes a plurality of fuel cells (individual fuel cells) 104 layered (stacked) in alternation with separators 106. Each fuel cell is capable of generating electric energy through electrochemical reactions between hydrogen and oxygen based on methanol. Each fuel cell 104 in the cell stack 102 includes electrolyte (electrolyte film) 104a provided by a solid polymer film for example, and a pair of an anode (fuel electrode) 104b and a cathode (air electrode) 104c opposed to each other, with the electrolyte 104a in between. The anode 104b and the cathode 104c each include a platinum catalyst layer provided on the side closer to the electrolyte 104a.

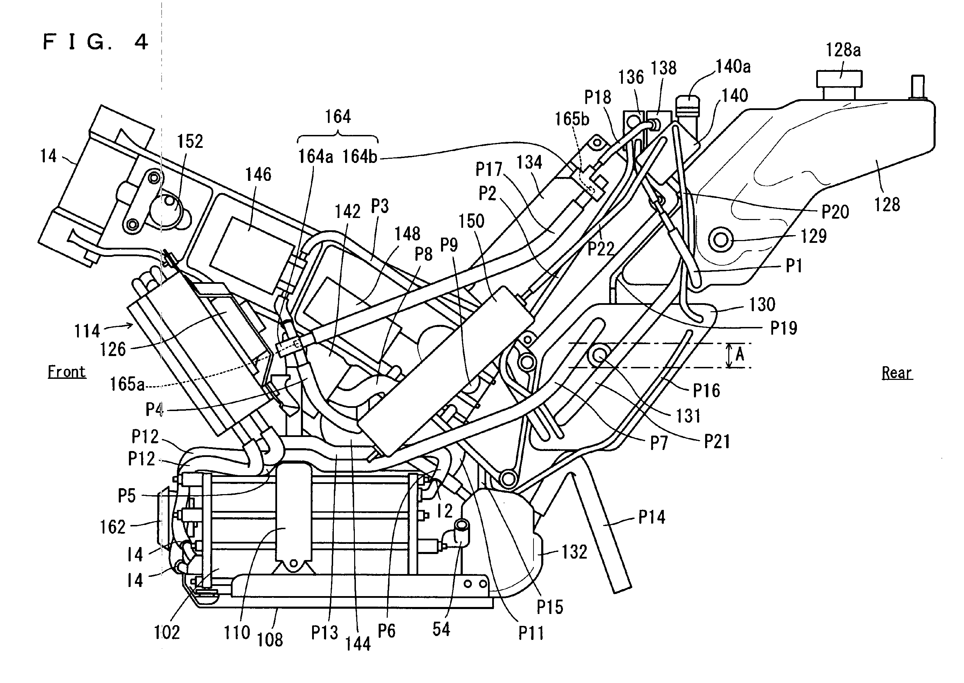

As shown in Fig. 4, etc., the cell stack 102 is placed on a skid 108. The skid 108 is supported by a stay stack 110 hung from the flange 16c of the front frame 16.

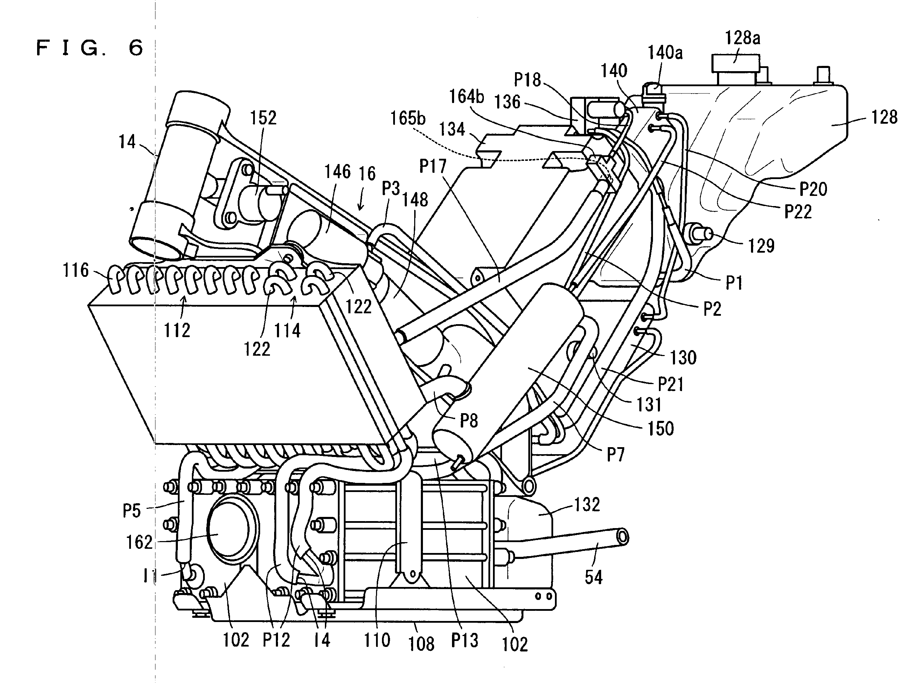

As shown in Fig. 6, an aqueous solution radiator 112 and a gas-liquid separation radiator 114 are disposed below the front frame 16, above the cell stack 102. The radiators 112 and 114 are integral with each other, having a front surface facing ahead of the vehicle in a slightly downward direction. The radiators 112 and 114 have a plurality of plate-like fins (not illustrated) which are perpendicular to the front surface. The radiators 112 and 114 as the above can receive sufficient winds while the vehicle is running.

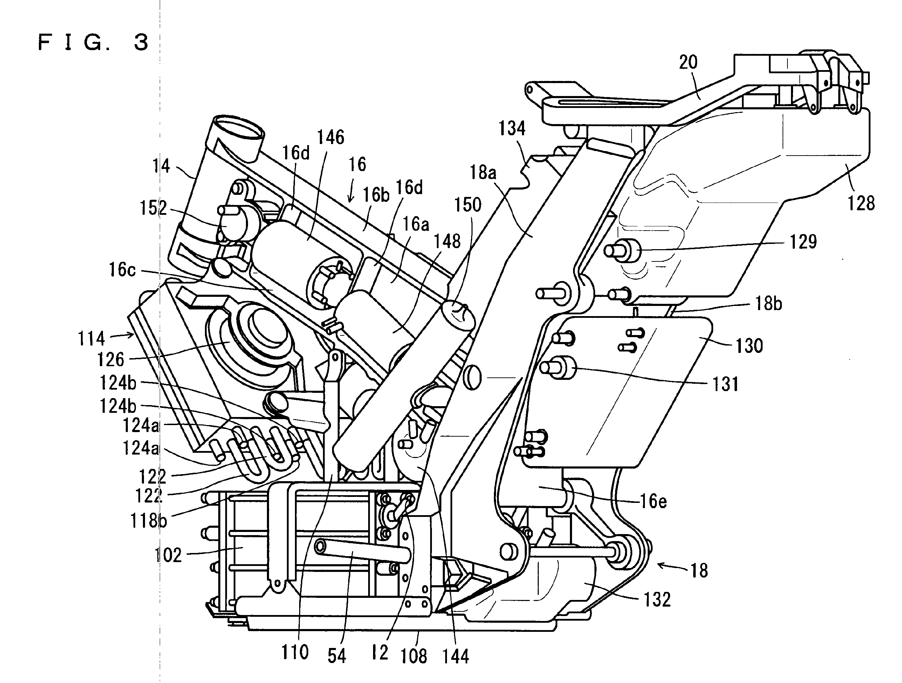

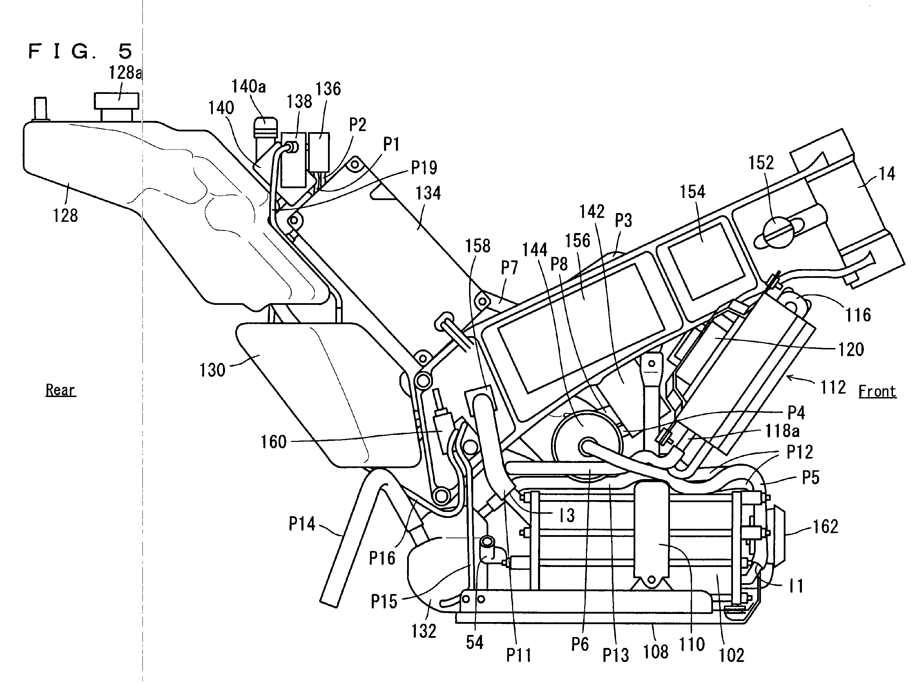

As shown in Fig. 6, etc., the radiator 112 includes a radiator pipe 116 formed in a swirling pattern. The radiator pipe 116 is a single continuous pipe formed by welding a plurality of straight pipe members made of stainless steel for example, with a plurality of generally U shaped pipe joints, extending from an inlet 118a (See Fig. 5) through an outlet 118b (See Fig. 3). The radiator 112 has a rear surface faced by a cooling fan 120 opposed to the radiator pipe 116.

Likewise, the radiator 114 includes two radiator pipes 122 each formed in a meander pattern. Each radiator pipe 122 is a single continuous pipe formed by welding a plurality of straight pipe members made of stainless steel for example, with a plurality of generally U shaped pipe joints, extending from an inlet 124a (See Fig. 3) through an outlet 124b (See Fig. 3). The radiator 114 has a rear surface faced by a cooling fan 126 opposed to the radiator pipe 122.

Returning to Fig. 1 through Fig. 7, and referring mainly to Fig. 3, a fuel tank 128, an aqueous solution tank 130 and a water tank 132 are disposed in this order from top to down, behind the connecting region 16e of the front frame 16. The fuel tank 128, the aqueous solution tank 130 and the water tank 132 are formed by PE (polyethylene) blow molding, for example.

The fuel tank 128 is below the seal rail 20 and is attached to a rear end of the seal rail 20. The fuel tank 128 contains a methanol fuel (high concentration aqueous solution of methanol) having a high concentration level (containing methanol at approximately 50 wt%, for example) which is used as fuel for the electrochemical reaction in the cell stack 102. The fuel tank 128 has a lid 128a on its upper surface. The lid 128a is removed when replenishing the tank with methanol fuel.

The aqueous solution tank 130 is below the fuel tank 128 and is attached to the rear frame 18. The aqueous solution tank 130 contains methanol aqueous solution, which is a solution of the methanol fuel from the fuel tank 128 diluted to a suitable concentration (containing methanol at approximately 3 wt%, for example) for the electrochemical reaction in the cell stack 102. In other words, the aqueous solution tank 130 contains a methanol aqueous solution which is to be sent by the aqueous solution pump 146 (to be described later) toward the cell stack 102.

The fuel tank 128 is provided with a level sensor 129 for detecting the height of liquid surface of the methanol fuel in the fuel tank 128. The aqueous solution tank 130 is provided with a level sensor 131 for detecting the height of liquid surface of the methanol aqueous solution in the aqueous solution tank 130. By detecting the height of fluid surfaces with the level sensors 129, 131, the amount of fluids in the tanks can be detected. The liquid surface in the aqueous solution tank 130 is controlled to stay within a range indicated by a letter A in Fig. 4 for example.

The water tank 132 is between the plate members 18a and 18b of the rear frame 18 and behind the cell stack 102.

In front of the fuel tank 128 and above the flange 16b of the front frame 16 is a secondary battery 134. The secondary battery 134 stores the electric energy generated by the cell stack 102, and supplies the stored electric energy to the electric components in response to commands from the controller 156 (to be described later). For example, the secondary battery 134 supplies electric energy to peripheral components and the drive unit 62.

Above the secondary battery 134 and below the seat rail 20 is disposed a fuel pump 136 and a measurement valve 138. In the present embodiment, the measurement valve 138 represents the flow controlling means.

A catch tank 140 is disposed above the aqueous solution tank 130. The catch tank 140 has a lid 140a on its upper surface. If the fuel cell system 100 has not ever been started (when the aqueous solution tank 130 is empty) for example, the lid 140a is removed to supply the tank with methanol aqueous solution. The catch tank 140 is formed by PE (polyethylene) blow molding, for example.

An air filter 142 is disposed in a space surrounded by the front frame 16, the cell stack 102 and the radiators 112, 114. Behind and below the air filter 142 is disposed an aqueous solution filter 144.

As shown Fig. 4, an aqueous solution pump 146 and an air pump 148 are housed in the storage space on the left side of the front frame 16. On the left side of the air pump 148 is an air chamber 150. The aqueous solution pump 146 is placed at a higher level than the aqueous solution tank 130.

Further, as shown in Fig. 5, a main switch 152, a DC/DC converter 154, a controller 156, a rust prevention valve 158 and a water pump 160 are disposed in this order from front to rear in the storage space on the right side of the front frame 16. The main switch 152 penetrates the storage space in the front frame 16 from right to left. In front of the cell stack 102 is a horn 162.

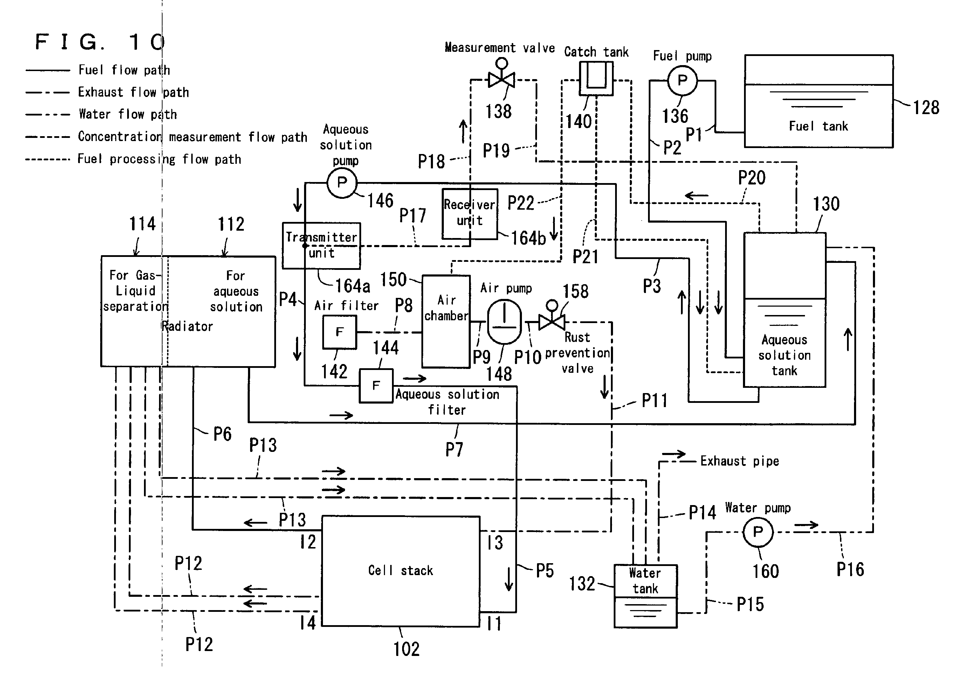

With the above-described layout, reference will now be made to Fig. 4 through Fig. 7 and Fig. 10 to describe piping in the fuel cell system 100.

The fuel tank 128 and the fuel pump 136 are connected with each other by a pipe P1. The fuel pump 136 and the aqueous solution tank 130 are connected with each other by a pipe P2. The pipe P1 connects a left side surface lower end of the fuel tank 128 with a left side surface lower end of the fuel pump 136. The pipe P2 connects a left side surface lower end of the fuel pump 136 with a left side surface lower end of the aqueous solution tank 130. By driving the fuel pump 136, methanol fuel in the fuel tank 128 is supplied to the aqueous solution tank 130 via the pipes P1, P2.

The aqueous solution tank 130 and the aqueous solution pump 146 are connected with each other by a pipe P3. The aqueous solution pump 146 and the aqueous solution filter 144 are connected with each other by a pipe P4, and the aqueous solution filter 144 and the cell stack 102 are connected with each other by a pipe P5. The pipe P3 connects the left side surface lower corner of the aqueous solution tank 130 with a rear portion of the aqueous solution pump 146. The pipe P4 connects a rear portion of the aqueous solution pump 146 with a left side surface of the aqueous solution filter 144. The pipe P5 connects the right side surface of the aqueous solution filter 144 with an anode inlet I1 located at a front surface lower right corner of the cell stack 102. By driving the aqueous solution pump 146, methanol aqueous solution from the aqueous solution tank 130 is pumped from the pipe P3 side to the pipe P4 side, impurities in the solution are filtered by the aqueous solution filter 144, and then the solution is supplied to the cell stack 102 via the pipe P5. In the present embodiment, the pipes P4 and P5 constitute a piping which guides the methanol aqueous solution pumped by the aqueous solution pump 146 to the fuel cells 104 in the cell stack 102.

The cell stack 102 and the aqueous solution radiator 112 are connected with each other by a pipe P6, and the radiator 112 and the aqueous solution tank 130 are connected with each other by a pipe P7. The pipe P6 connects an anode outlet I2 located at a rear surface upper left corner of the cell stack 102 with an inlet 118a (See Fig. 5) of the radiator pipe 116 which comes out of a lower surface right side end of the radiator 112. The pipe P7 connects an outlet 118b (See Fig. 3) of the radiator pipe 116 which comes out of a lower surface of the radiator 112 with a left side surface upper corner of the aqueous solution tank 130. Unused methanol aqueous solution and carbon dioxide discharged from the cell stack 102 flow through the pipe P6 to the radiator 112 where they are cooled, and then returned via the pipe P7 to the aqueous solution tank 130. With this arrangement, the temperature of methanol aqueous solution in the aqueous solution tank 130 can be decreased.

The pipes P1 through P7 serve primarily as a flow path for the fuel. The circulating means provides a recirculation route for the fuel aqueous solution discharged from the cell stack 102 to be supplied again to the cell stack 102, and includes the pipes P3 through P7, the aqueous solution tank 130, the aqueous solution pump 146, the aqueous solution filter 144 and the aqueous solution radiator 112 in the present embodiment. It should be noted here, however, that the circulating means may not necessarily include the aqueous solution filter 144 or the radiator 112.

The air filter 142 and the air chamber 150 are connected with each other by a pipe P8. The air chamber 150 and the air pump 148 are connected with each other by a pipe P9, the air pump 148 and the rust prevention valve 158 are connected with each other by a pipe P10 whereas the rust prevention valve 158 and the cell stack 102 are connected with each other by a pipe P11. The pipe P8 connects a rear portion of the air filter 142 with a portion of the air chamber 150 which is slightly ahead of the center of the chamber. The pipe P9 connects a lower center portion of the air chamber 150 with a rear portion of the air pump 148. The pipe P10 connects the air pump 148 located on the left side of the plate member 16a in the front frame 16 with the rust prevention valve 158 located on the right side of the plate member 16a. The pipe P11 connects the rust prevention valve 158 with a cathode inlet I3 located on a rear surface upper right end of the cell stack 102. When the fuel cell system 100 is in operation, the rust prevention valve 158 is opened. By driving the air pump 148 under this condition, air containing oxygen is introduced from outside. The introduced air is purified by the air filter 142, then flows through the pipe P8, the air chamber 150 and the pipe P9 to the air pump 148, and then through the pipe P10, the rust prevention valve 158 and the pipe P11, supplied to the cell stack 102. The rust prevention valve 158 is closed when the fuel cell system 100 is not in operation, prevents backflow of water vapor into the air pump 148 and thereby prevents rusting of the air pump 148.

The cell stack 102 and the gas-liquid separation radiator 114 are connected with each other by two pipes P12. The radiator 114 and the water tank 132 are connected with each other by two pipes P13. The water tank 132 is provided with a pipe (exhaust pipe) P14. Each of the pipes P12 connects a cathode outlet I4 located on a front surface lower left corner of the cell stack 102 with an inlet 124a (See Fig. 3) to a corresponding radiator pipe 122 which comes out from a lower surface left side end of the radiator 114. Each of the pipes P13 connects an outlet 124b (See Fig. 3) of a corresponding one of the radiator pipes 122 with a front surface upper portion of the water tank 132. The radiator pipes 122 come out of the lower surface of the radiator 114, at a location slightly closer to the center than the left side end. The pipe P14 is connected with a rear surface upper portion of the water tank 132, and is angled so it goes up and then down. Exhaust gas which is discharged from the cathode outlet I4 of the cell stack 102 contains water (liquid water and water vapor) and carbon dioxide. The exhaust gas flows through the pipe P12 into the radiator 114, where water vapor is liquefied. After leaving the radiator 114, the exhaust gas flows together with the water through the pipe P13 into the water tank 132, before discharged to outside via the pipe P14.

The pipes P8 through P14 serve primarily as a flow path for the exhaust gas.

The water tank 132 and the water pump 160 are connected with each other by a pipe P15 whereas the water pump 160 and the aqueous solution tank 130 are connected with each other by a pipe P16. The pipe P15 connects a right side surface lower portion of the water tank 132 with a center portion of the water pump 160. The pipe P16 connects a center portion of the water pump 160 with a left side surface upper corner of the aqueous solution tank 130. By driving the water pump 160, water in the water tank 132 is returned to the aqueous solution tank 130 via the pipes P15, P16.

The pipes P15, P16 serve as a flow path for the water.

The pipe P4 is connected with the pipe P17 so that part of the methanol aqueous solution pumped by the aqueous solution pump 146 and flowing through the pipe P4 flows in. As shown in Fig. 4, the pipe P17 extends rearward and upward on the left side of the vehicle frame 12, with a greater upward tilt near the end. The pipe P17 is formed of Teflon (registered trademark) for example, and is not shorter than 20 cm in length (20 cm approx. in the embodiment).

An ultrasonic sensor 164 is attached to the pipe P17 for measuring the methanol concentration in the methanol aqueous solution (percentage of methanol to methanol aqueous solution) which has flown into the pipe P17. The ultrasonic wave travels at different speeds depending on the concentration of the methanol in the methanol aqueous solution. The ultrasonic sensor 164 utilizes this principle for measuring the methanol concentration of the methanol aqueous solution in the pipe P17. In the present embodiment, the ultrasonic sensor 164 and the controller 156 represent the measuring means.

As shown in Fig. 4, the ultrasonic sensor 164 serving as a concentration sensor has a transmitter unit 164a which transmits an ultrasonic wave, and a receiver unit 164b which detects the ultrasonic wave. The transmitter unit 164a of the ultrasonic sensor 164 is inserted into the pipe P4 and connected with an upstream end of the pipe P17. On the other hand, the receiver unit 164b is connected with a downstream end of the pipe P17, and is placed on the left side surface of the secondary battery 134, below and ahead of the measurement valve 138. The transmitter unit 164a has an ultrasonic oscillator 165a which generates an ultrasonic wave of a predetermined frequency (510 kHz, for example), whereas the receiver unit 164b has a receiver 165b which detects the ultrasonic wave from the oscillator 165a. In the ultrasonic sensor 164, the transmitter unit 164a generates an ultrasonic wave, the receiver unit 164b receives the ultrasonic wave which has traveled through the methanol aqueous solution, and detects a propagation speed based on the time between commencement of the ultrasonic wave generation at the transmitter unit 164a and the ultrasonic wave reception at the receiver unit 164b. Based on the propagation speed, the controller 156 detects the methanol concentration of the methanol aqueous solution in the pipe P17. The length of the pipe P17 which is not shorter than 20 cm reduces detection error by the receiver 165b, enabling to improve measuring accuracy of the methanol concentration.

The receiver unit 164b of the ultrasonic sensor 164 and the measurement valve 138 which is disposed behind and above the receiver unit 164b are connected with each other by a pipe P18 which extends rearward and upward. The measurement valve 138 and the aqueous solution tank 130 are connected with each other by a pipe P19. The pipe P18 connects an upper surface of the receiver unit 164b with a left side surface of the measurement valve 138. The pipe P19 connects a right side surface of the measurement valve 138 with an upper surface of the aqueous solution tank 130.

The pipes P17 through P19 serves as a flow path for concentration measurement. In the present embodiment, the pipe P17 constitutes the measuring portion and a space inside the pipe P17 provides the measuring space. Also, in the present embodiment, the pipes P18, P19 constitute the recycling path.

The aqueous solution tank 130 and the catch tank 140 are connected with each other by a pipe P20. The catch tank 140 and the aqueous solution tank 130 are connected with each other by a pipe P21. The catch tank 140 and the air chamber 150 are connected with each other by a pipe P22. The pipe P20 connects a left side surface upper corner of the aqueous solution tank 130 with a left side surface upper corner of the catch tank 140. The pipe P21 connects a lower end of the catch tank 140 with a left side surface lower corner of the aqueous solution tank 130. The pipe P22 connects a location of a left side surface of the catch tank 140 closer to an upper portion thereof, with an upper end surface of the air chamber 150. Gas (main ingredients are carbon dioxide, gaseous methanol and water vapor) in the aqueous solution tank 130 is supplied to the catch tank 140 via the pipe P20. The gaseous methanol and the water vapor are cooled and liquefied in the catch tank 140, then flows through the pipe P21 back to the aqueous solution tank 130. Gas (carbon dioxide, methanol which was not liquefied and water vapor) in the catch tank 140 is supplied to the air chamber 150 via the pipe P22.

The pipes P20 through P22 constitute a flow path primarily for fuel processing.

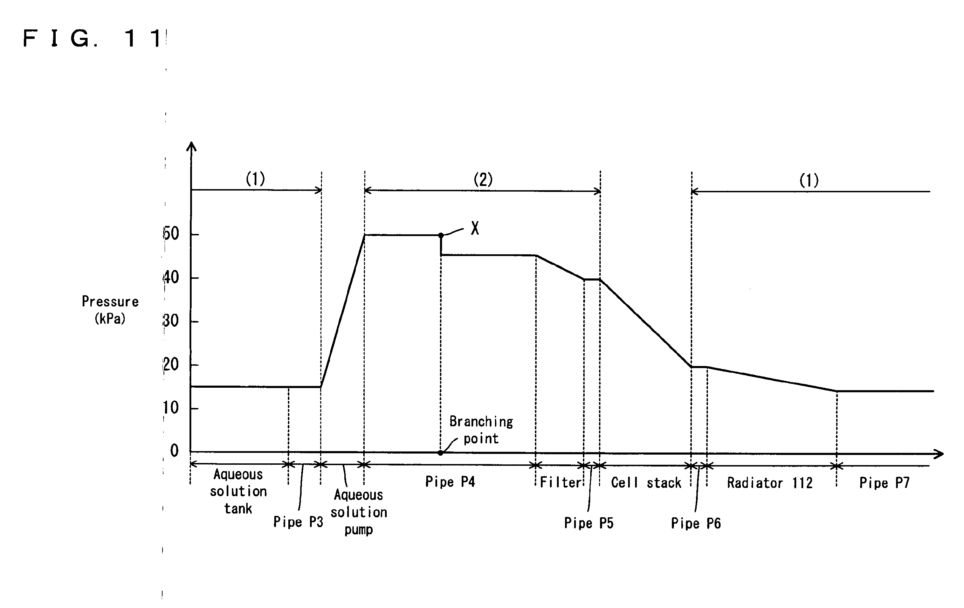

Now, refer to Fig. 11 which shows the pressure in the cell stack 102 and various components of the circulating means.

As understood from Fig. 11, the pressure X at the connecting point of the pipe P4 with the pipe P17, i.e., the branching point from the pipe P4 to the pipe P17 is much higher than the pressure in a range (1) which is the downstream side of cell stack 102 and the upstream side of the aqueous solution pump 146, i.e., in the pipe P6, the radiator 112, the pipe P7, the aqueous solution tank 130 and the pipe P3. In the present embodiment, the merging point where methanol aqueous solution after concentration measurement is returned to the circulating means is a connecting point of the pipe P19 with the aqueous solution tank 130, where the pressure is equal to the pressure in the aqueous solution tank 130. Therefore, there is a large pressure difference of approximately 35 kPa between the branding point and the merging point. For a reference, according to the technique disclosed in Patent Document 2, the pressure difference between the branding point and the merging point is likely to be within a range (2) in Fig. 11.

The fuel cell system 100 as described, is started when the main switch 152 is turned ON, controlled by the controller 156, and supplementary electric energy is supplied by the secondary battery 134. The DC/DC converter 154 converts 24 V to 12 V. The converted 12 V drives fans 120, 126.

Next, a main process of the fuel cell system 100 in operation will be described.

When the main switch 152 is turned ON, the fuel cell system 100 drives its components such as the aqueous solution pump 146 and the air pump 148, thereby starting to operate.

As the aqueous solution pump 146 is driven, methanol aqueous solution stored in the aqueous solution tank 130 is sent from the pipe P3 side to the pipe P4 side, into the aqueous solution filter 144. The aqueous solution filter 144 removes impurities from the methanol aqueous solution and then the methanol aqueous solution flows through the pipe P5 and the anode inlet I1, and then supplied directly to the anode 104b in each of the fuel cells 104 which constitute the cell stack 102.

Meanwhile, as the air pump 148 is driven, air is introduced through the air filter 142 and flows through the pipe P8 into the air chamber 150 where noise is silenced. The air which was introduced and gas which was supplied to the air chamber 150 from the catch tank 140 are supplied via the pipes P9 through P11 and the cathode inlet I3 to the cathode 104c in each of the fuel cells 104 which constitutes the cell stack 102.

At the anode 104b in each fuel cell 104, methanol and water in the supplied methanol aqueous solution chemically react with each other to produce carbon dioxide and hydrogen ions. The produced hydrogen ions flow to the cathode 104c via the electrolyte 104a, and electrochemically react with oxygen in the air supplied to the cathode 104c, to produce water (water vapor) and electric energy. Thus, power generation is performed in the cell stack 102. The generated electric energy is sent to and stored at the secondary battery 134, and is used, for example, to drive the two-wheeled vehicle 10.

Carbon dioxide produced at the anode 104b in each fuel cell 104 and unused methanol aqueous solution are heated (up to approximately 65°C-70°C for example) in the electrochemical reaction, and part of the unused methanol aqueous solution is vaporized. The carbon dioxide and the unused methanol aqueous solution flow from the anode outlet I2 of the cell stack 102 into the aqueous solution radiator 112, where they are cooled (down to approximately 40°C for example) by the fan 120 while flowing through the radiator pipe 116. The carbon dioxide and the unused methanol aqueous solution which have been cooled then flow through the pipe P7, and return to the aqueous solution tank 130.

Meanwhile, most of the water vapor occurred on the cathode 104c in each fuel cell 104 is liquefied and discharged in the form of water from the cathode outlet I4 of the cell stack 102, with saturated water vapor being discharged in the form of gas. Part of the water vapor which was discharged from the cathode outlet I4 is cooled and liquefied by lowering the dew point in the radiator 114. The radiator 114 liquefies the water vapor through operation of the fan 126. Water (liquid water and water vapor) from the cathode outlet I4 are supplied via the pipe P12, the radiator 114 and the pipe P13 to the water tank 132 together with unused air. Also, at the cathode 104c in each fuel cell 104, the vaporized methanol from the catch tank 140 and methanol which has moved to the cathode 104c due to crossover react with oxygen in the platinum catalyst layer, thereby being decomposed to harmless substances of water and carbon dioxide. The water and carbon dioxide which occurred from the methanol are discharged from the cathode outlet I4, and supplied to the water tank 132 via the radiator 114. Further, water which has moved due to water crossover to the cathode 104c in each fuel cell 104 is discharged from the cathode outlet I4, and supplied to the water tank 132 via the radiator 114.

The water collected in the water tank 132 is recycled appropriately by the pumping operation of the water pump 160, through the pipes P15, P16 to the aqueous solution tank 130, and is used as water for the methanol aqueous solution.

During the operation, the fuel cell system 100 performs a concentration measurement of methanol aqueous solution regularly (every 10 seconds for example) so that the fuel cells 104 will generate power efficiently while preventing their deterioration. Based on a result of the measurement, adjustment is made to the methanol concentration in methanol aqueous solution which is to be supplied to the cell stack 102. Specifically, results of the methanol concentration measurements are reflected upon the supply of methanol fuel from the fuel tank 128 to the aqueous solution tank 130, and the recycling of water from the water tank 132 to the aqueous solution tank 130.

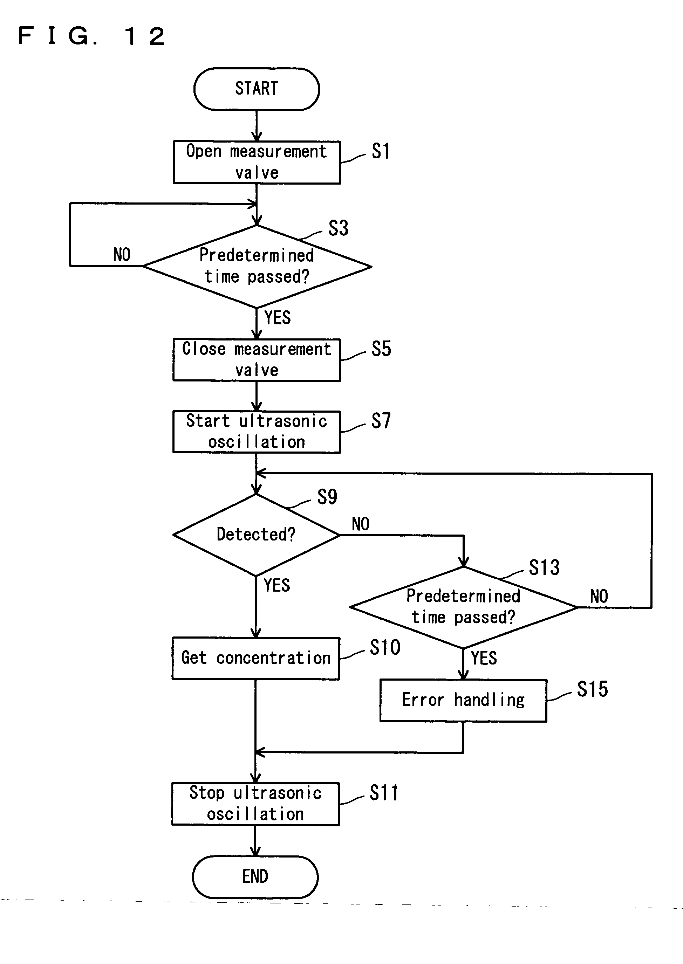

Now, reference is made to Fig. 12 to describe the concentration measurement process by the fuel cell system 100 during operation.

First, the measurement valve 138 is opened following a command from the controller 156 (Step S1), the measurement valve 138 is kept open until a predetermined period of time (five seconds for example) has passed (until Step S3 turns to YES). In the above, part of methanol aqueous solution, which is pumped by the aqueous solution pump 146 and is flowing in the pipe P4, branches into the pipe P17. As a result, methanol aqueous solution which was in the pipe P17 is discharged from the pipe P17. In other words, opening of the measurement valve 138 introduces new methanol aqueous solution into the pipe P17 for methanol concentration measurement while discharging methanol aqueous solution whose concentration measurement was finished, from the pipe P17. The methanol aqueous solution whose concentration measurement was finished and discharged from the pipe P17 flows through the pipes P18, P19 and returns to the aqueous solution tank 130.

It should be noted that when the aqueous solution pump 146 is first driven, the measurement valve 138 is closed. After commencement of the operation and before the first concentration measurement is started, the pipe P17 is filled with air. In this case, the air which was in the pipe P17 flows into the aqueous solution tank 130.

Then, when the predetermined period of time has passed (when Step S3 turns to YES), the measurement valve 138 is closed (Step S5), and the flow (fluid velocity) of the methanol aqueous solution within the pipe P17 is reduced. In the present embodiment, the measurement valve 138 is closed completely whereby the flow is stopped and the methanol aqueous solution is held in the pipe P17.

Subsequently, the oscillator 165a in the transmitter unit 164a starts ultrasonic wave generation (Step S7). The ultrasonic wave from the transmitter unit 164a propagates in the methanol aqueous solution trapped in the pipe P17 toward the receiver unit 164b.

When the receiver 165b of the receiver unit 164b receives the ultrasonic wave from the transmitter unit 164a and detects the propagation speed of the ultrasonic wave (if Step S9 turns to YES), the receiver unit 164b sends to the controller 156 a detection signal representing the propagation speed, and the controller 156 detects the methanol concentration (Step S10). Thereafter, the transmitter unit 164a stops the ultrasonic wave generation (Step S11), and the concentration measurement process comes to an end.

On the other hand, if the receiver 165b of the receiver unit 164b fails to detect the propagation speed (Step S9 turns to NO) for a predetermined period of time (ten seconds for example) (if Step S13 turns to YES), the system determines that methanol concentration is not measurable and moves to an error handling routine (Step S15), and then moves to Step S11. The ultrasonic wave generation is continued till the receiver 165b detects the propagation speed (until Step S9 turns to YES) unless the predetermined time has passed (until Step S13 turns to YES).

In Step S15, the controller 156 executes such a routine as using a methanol concentration measured in the previous concentration measurement process as a methanol concentration measured in the current concentration measurement process.

The fuel cell system 100 performs the concentration measurement process as described above at a predetermined time interval and thus measures the methanol concentration in methanol aqueous solution which is being sent toward the cell stack 102 repeatedly. Methanol aqueous solution which was introduced into the pipe P17 and held there in the previous concentration measurement process is released in the current concentration measurement process when the measurement valve 138 is opened (Step S1), and flows out of the pipe P17 back to the aqueous solution tank 130. Simultaneously, there is a flow of new methanol aqueous solution into the pipe P17 for the current concentration measurement process to measure the methanol concentration. Thereafter, the measurement valve 138 is closed and a measurement is made for the methanol concentration of the methanol aqueous solution in the pipe P17.

It should be noted here that in the above concentration measurement process, description was made for a case in which the measurement valve 138 is completely closed in Step S5; however, the present invention is not limited by this. For example, the measurement valve 138 may be closed to reduce the fluid velocity of the methanol aqueous solution in the pipe P17 to an extent that the velocity will not cause a substantial adverse affect on the ultrasonic wave propagation speed. The state of methanol aqueous solution in this case is also included in the term "trapped" as used in the present invention.

According to the fuel cell system 100 as described, methanol aqueous solution is continuously sent toward the cell stack 102 via the pipe P4 for continuous power generation while methanol aqueous solution in the pipe P17 is replaced and a methanol concentration measurement is made to new methanol aqueous solution trapped in the pipe P17. In this process, methanol aqueous solution discharged from the pipe P17 is returned to a portion of the circulating means which is downstream of the cell stack 102 and upstream of the aqueous solution pump 146. Therefore, it becomes possible to create a large pressure difference between the branching point (the connection point between the pipe P4 and the pipe P17 in the present embodiment) and the merging point (the connection point between the pipe P19 and the aqueous solution tank 130 in the present embodiment) without providing a throttle in any of the pipes P3 through P7 in the circulating means, and thereby reliably replace a body of methanol aqueous solution in the pipe P17 with another body of methanol aqueous solution. Since there is not need for providing a throttle in the pipes P3 through P7 of the circulating means, there is no pressure loss, which enables to reduce power consumption by the aqueous solution pump 146. Thus, it becomes possible to accurately measure the methanol concentration in the methanol aqueous solution which is sent toward the cell stack 102, without decreasing power generation efficiency.

Further, methanol aqueous solution whose concentration has been measured in the pipe P17 is returned to the aqueous solution tank 130 which is placed downstream of the cell stack 102 and upstream of the aqueous solution pump 146. This enables to use the methanol aqueous solution without wasting it. Further, even if the methanol aqueous solution in the pipe P17 is cooled in order to cool the ultrasonic sensor 164, disadvantages in supplying the methanol aqueous solution directly to the cell stack 102 is eliminated since the methanol aqueous solution is returned to the aqueous solution tank 130. In other words, decrease in power generation efficiency caused by temperature decrease in the cell stack 102 can be prevented.

Further, trapping and replacing of methanol aqueous solution in the pipe P17 is achieved easily by a simple operation of opening and closing of the measurement valve 138.

The fuel cell system 100 traps methanol aqueous solution in the pipe P17, and the methanol concentration measurement is made to the trapped methanol aqueous solution. Therefore, the fuel cell system 100 is particularly effective when using an ultrasonic sensor 164 whose measuring accuracy can be adversely affected when there is a flow in the methanol aqueous solution.

The fuel cell system 100 can be used suitably for a two-wheeled vehicle 10 since the system enables accurate measurement of the methanol concentration in methanol aqueous solution which is sent to the cell stack 102 without disturbing power generation.

It should be noted here that in the embodiment described above, the measuring means includes an ultrasonic sensor 164 which has a transmitter unit 164a and a receiver unit 164b. Alternatively, the transmitter unit and the receiver unit may be integral with each other in the ultrasonic sensor. In this case, the fuel cell system is arranged such that the ultrasonic wave from the ultrasonic sensor is reflected back to the ultrasonic sensor. Furthermore, the sensor used in the measuring means is not limited to an ultrasonic sensor. Examples are: a specific-weight sensor for methanol concentration measurement based on the weight of methanol aqueous solution, a crystal oscillation sensor for methanol concentration measurement based on the viscosity of methanol aqueous solution, a electrical resistance sensor for methanol concentration measurement based on the electrical resistance of methanol aqueous solution, and an electric capacitance sensor for methanol concentration measurement based on the electric capacitance of methanol aqueous solution. The present invention can be used suitably for fuel cell systems which use measuring means including a sensor including any of the above examples whose measuring accuracy is affected by a flow of methanol aqueous solution.

In the embodiment described above, an ultrasonic sensor 164 and a controller 156 constitute the measuring means; however the present invention is not limited by this. For example, the measuring means may be provided only by a single ultrasonic sensor 164 capable of measuring the methanol concentration.

Further, in the embodiment described above, description is made for a case in which the pipe P17 serving as the measuring portion is connected with a pipe P4; however, the present invention is not limited by this. The pipe P17 may be connected with whatever else, such as the pipe P5, as long as the connection is made to a portion of the circulating means which is downstream of the aqueous solution pump 146 and upstream of the cell stack 102.

In the embodiment described above, description is made for a case in which the recycling path is connected with the aqueous solution tank 130 so that methanol aqueous solution after methanol concentration measurement is returned to the aqueous solution tank 130; however, the present invention is not limited by this. The recycling path may be connected with whatever else such as the pipe P3, P6 or P7, as long as the connection is made to a portion of the circulating means which is downstream of the cell stack 102 and upstream of the aqueous solution pump 146.

Moreover, the flow controlling means is not limited to a measurement valve 138, and may be provided by a throttle which keeps a constant velocity of the flow of fuel aqueous solution.

Flow paths included in the circulating means are not limited to pipes, and may be provided by any other means capable of allowing fuel aqueous solution to flow. The same applies to the recycling path.

Moreover, the embodiment described above uses methanol as a fuel and methanol aqueous solution as a fuel aqueous solution; however the present invention is not limited by this. For example, the fuel may be provided by other alcoholic fuel such as ethanol, and the fuel aqueous solution may be provided by aqueous solution of the alcohol, such as ethanol aqueous solution.

The fuel cell system according to the present invention can be used suitably not only in two-wheeled vehicles but also in automobiles, marine vessels and any other transport equipment.

The present invention is also applicable to fuel cell systems which make use of a reformer. When application is made to a reformer type fuel cell system, the reformer is connected with pipes on a downstream side of a connection of the measuring portion with its pipe. Further, the present invention is applicable to small-scale, stationary-type fuel cell systems.

The present invention being thus far described and illustrated in detail, it is obvious that these description and drawings only represent an example of the present invention, and should not be interpreted as limiting the invention. The spirit and scope of the present invention is only limited by words used in the accompanied claims.

## Claims

1. A fuel cell system comprising:
a fuel cell,
circulating means including a flow path and an aqueous solution pump for circulating supply of fuel aqueous solution to the fuel cell;
a measuring portion for introducing part of the fuel aqueous solution flowing in a portion of the flow path which is downstream of the aqueous solution pump and upstream of the fuel cell;
flow controlling means for controlled replacement and trapping of the fuel aqueous solution in the measuring portion;
a recycling path for returning the fuel aqueous solution from the measuring portion to a portion of the circulating means which is downstream of the fuel cell and upstream of the aqueous solution pump; and
measuring means for measuring fuel concentration of the fuel aqueous solution in the measuring portion.

2. The fuel cell system according to Claim 1, wherein the circulating means further includes an aqueous solution tank provided downstream of the fuel cell and upstream of the aqueous solution pump for storing the fuel aqueous solution,
the recycling path returns the fuel aqueous solution to the aqueous solution tank.

3. The fuel cell system according to Claim 1, wherein the flow controlling means includes a valve provided in the recycling path.

4. The fuel cell system according to one of Claims 1 through 3, wherein the measuring means includes an ultrasonic sensor.

5. Transport equipment comprising the fuel cell system according to one of Claims 1 through 4.

6. A method of measuring fuel concentration in fuel aqueous solution for a fuel cell system including circulating means which provides circulating supply of the fuel aqueous solution to a fuel cell using an aqueous solution pump, the method comprising:
a first step of introducing the fuel aqueous solution sent from the aqueous solution pump toward the fuel cell, into a measuring space;
a second step of trapping the fuel aqueous solution which has flown into the measuring space within the measuring space;
a third step of measuring fuel concentration of the fuel aqueous solution trapped in the measuring space; and
a fourth step of discharging the fuel aqueous solution for which the fuel concentration measurement has been made, from the measuring space to a portion of the circulating means which is downstream of the fuel cell and upstream of the aqueous solution pump.

7. The method according to Claim 6, wherein the circulating means further includes an aqueous solution tank provided downstream of the fuel cell and upstream of aqueous solution pump for storing the fuel aqueous solution,
the fourth step including a sub-step of returning the fuel aqueous solution discharged from the measuring space to the aqueous solution tank.
